(19) Europäisches Patentamt

European Patent Office

Office européen des brevets

(11) EP 0 636 654 B1

(12) **EUROPEAN PATENT SPECIFICATION**

(45) Date of publication and mention
of the grant of the patent:
**01.10.1997 Bulletin 1997/40**

(51) Int Cl.6: **C08L 53/02**, C09J 153/02, C08K 5/00, C08K 5/13, C08K 5/37
// (C08K5/00, 5:524, 5:134), (C08K5/00, 5:524, 5:378)

(21) Application number: **94202210.4**

(22) Date of filing: **28.07.1994**

(54) **Block copolymer composition, a process for its preparation and a hot melt adhesive comprising said composition**

Blockcopolymerzusammensetzung, ein Verfahren zu ihrer Herstellung und diese Zusammensetzung enthaltender Heizschmelzkleber

Composition de copolymère bloc, un procédé pour sa préparation et un adhésif thermofusible à base de la dite composition

(84) Designated Contracting States:
**BE DE ES FR GB IT NL**

(30) Priority: **28.07.1993 EP 93202235**

(43) Date of publication of application:
**01.02.1995 Bulletin 1995/05**

(73) Proprietor: **SHELL INTERNATIONALE RESEARCH MAATSCHAPPIJ B.V. 2596 HR Den Haag (NL)**

(72) Inventors:
• **van Westrenen, Jeroen NL-1031 CM Amsterdam (NL)**
• **Veurink, Jacqueline Margaretha NL-1031 CM Amsterdam (NL)**
• **van Dongen, Arie NL-2596 HR Den Haag (NL)**

(56) References cited:
**EP-A- 0 387 671        US-A- 4 835 200
US-A- 5 149 741**

• **PATENT ABSTRACTS OF JAPAN vol. 17, no. 663 (C-1138) 8 December 1993 & JP-A-52 014 206 (DENKI KAGAKU K.K.K.) 24 August 1993**

## Description

The present invention relates to a block copolymer composition, a process for preparation thereof and an adhesive comprising said composition. More in particular, the present invention relates to a linear block copolymer composition, which can be suitably applied in hot melt adhesive compositions and which is colour stable and heat resistant during preparation of the adhesive composition and the processing thereof.

Styrene-conjugated diene block copolymers presently form a predominant key building block for hot melt pressure sensitive adhesive compositions.

As was known from e.g. "New Styrene Block Copolymers for Tape and Label use", F.C. Jagisch and J.M. Tancrede, PSCT Seminar Proceedings, May 1990, it has been generally accepted that a majority of styrene-conjugated diene block copolymers (further to be mentioned SBC's) to be used in hot melt pressure sensitive adhesive compositions are formed by block copolymers of the structures ABA or $(AB)_nX$, wherein A represents a polystyrene block and B represents a poly(conjugated diene) and more preferably poly(butadiene), poly(isoprene), poly(butadiene/isoprene) or ethylene/butylene random copolymer. Three dominant commercial preparation methods for such SBC's have been developed:

(a) the traditional coupling method, involving the steps of synthesis of relatively low molecular weight poly(styrene) polymer blocks by monofunctional anionic initiation of styrene, addition of one or more conjugated dienes to form "living" poly(styrene-conjugated diene) segments or diblocks, and coupling these anionic living diblocks to yield linear styrene-conjugated diene-styrene copolymer or - by using multifunctional coupling agents - multiarmed or radial copolymers, or

(b) sequential synthesis of a linear triblock copolymer ABA by initial synthesis of a diene midblock using a difunctional initiator, wherein the chain is growing from the center outward in both directions, addition of styrene which reacts with the dienyl anion chain ends to form polystyrene endblocks, and termination with a suitable proton donor, and

(c) sequential synthesis of a linear triblock copolymer ABA by initial synthesis of a living polystyrene block through a monofunctional initiator, addition of conjugated diene and completing its polymerization, addition of a second portion of styrene and completing its polymerization, and termination with a suitable proton donor.

It will be appreciated that an inherent consequence of preparation method (a) is the presence of a significant amount, usually ten percent or more, of uncoupled terminated diblock, since the coupling process does not provide 100 percent conversion.

Whereas this diblock content seemed to have little effect on quick stick or peel strength, said low molecular weight, non-cross-linked or non-load bearing diblock components have appeared to reduce the holding power (shear strength) and elevated temperature performance, as indicated by Shear Adhesion Fail Temperature (SAFT) in some degree.

However, the reduction of the melt viscosity caused by such diblock components, may be regarded as a desirable aspect.

On the other hand, it was known that specific measures had to be taken during the manufacture of said SBC's, intended to be used in hot melt adhesive compositions. Said SBC's had to be colour stable and heat resistant under preparation and processing conditions of the hot melt adhesive compositions, whereas said SBC's had also to retain their other physical properties.

In particular there was still a strong need for improved colour stable and heat resistant SBC's, the preceding polymer chains of which contain terminal alkali metal, resulting from the initiation of the polymerization.

A great variety of proposals was made to solve this problem, in general directed on the avoidance of the use of specific halogen-containing coupling agents, the use of specifically selected anti-oxidant additives to stabilize the poly(conjugated diene) phase during the polymer transformation stage and/or the use of specifically selected acids to be used for the neutralization of the living terminal alkali metals and in particular lithium resulting from the initiation.

For example, from the European patent No. 0309434 was known a process for decolorizing styrene-conjugated diene block copolymers, having a relatively high styrene content to yield perfectly transparent copolymers, having good impact strength properties and satisfying the demanding criteria set by the food-supply industry, comprising the treatment of polymer derived from living chains which end with an alkali metal, with a specific group of sulphur containing carboxylic acids and more preferably thiodipropionic acid or thiodiglycollic acid or methylene bis(thiopropionic acid) or methylene bis(thioacetic acid).

The starting copolymers to be treated with these carboxylic acids were predominantly obtained by coupling of living block polymers by a large variety of listed coupling agents.

As antioxidants were used 2,6-bis(1,1-dimethylethyl(-4-methylphenol (BHT); tris(p-nonylphenyl)phosphite (TNPP) and octadecyl ester of 3,5-bis(1,1-dimethylethyl)-4-hydroxybenzene propanoic acid (IRGANOX 1076) (IRGANOX is a trade mark).

From European patent application No. 0379951 a process was known for the preparation of SBC's by anionic polymerization using an alkali metal-containing initiator, whereby the polymerization is terminated by adding an aliphatic or aromatic compound containing one or two hydroxyl groups after which the polymer cement is neutralized by adding an organic acid halide. Finally, the polymer is recovered. In the comparative examples of said European patent application, neutralization is achieved by adding oleic acid or glacial acetic acid in toluene solvent, while an antioxidant package consisting of TNPP and the triazine derivative 4-((4,6-bis(octylthio)-s-triazin-2-yl)amine)-2,6-di-t-butylphenol was also included in said block copolymer composition. However, the comparative organic acids were shown to be inferior as compared to the proposed organic acid halides and this teaching could lead a person skilled in the art only away from the application of organic acids as such as neutralizing agents.

From European patent application no. 0387.671 a process was known for preparing non coloring block copolymers by polymerizing monovinylidene aromatic monomers and alkadienes - by means of a alkalimetal containing anionic diinitiator and in particular a organo lithium diinitiator, and terminating the polymerisation by contacting the resulting reaction mixture with an inorganic acid selected from sulfuric acid, phosphoric acid and mixtures thereof.

From European patent application No. 0479754 a process was known for decolorizing SBC's, obtained through an initiation step of the copolymerization with alkali metal catalysts, comprising the treatment of the copolymer with a monocarboxylic acid of the formula R-COOH, wherein R represents a linear or branched aliphatic, cycloaliphatic or alkenic hydrocarbon group containing from 2 to 4 carbon atoms, said treatment being performed after the actual termination of the anionic polymerization with a separate active hydrogen containing reagent.

In addition to said acids, small amounts of anti-oxidants such as TNPP and IRGANOX 1076 were added to the block copolymer, having a weight ratio between styrene and butadiene of > 1 and in particular 75/25.

From Japanese patent application (Kokai) No. 63-179953 a process was known for the preparation of a polymer composition, comprising the steps of addition of 0.05 to 5 equivalents of one or more organic acids, based on the organolithium compound initially used as initiator for the polymerization in organic solvent solution of conjugated diene and/or vinyl aromatic hydrocarbon, in which polymer solution may also be present a terminator, and then incorporation of 0.05 to 5 parts by weight based on 100 parts by weight of said polymer of at least one phenol compound selected from the group formed according to three specified formulae covering a number of commercially available anti-oxidants of the trade name SUMILIZER (SUMILIZER is a trade mark).

From US patent No. 4,403,074 a process was known for the preparation of a resinous copolymer of at least one conjugated diene and at least one hydrocarbon monovinylarene, which comprises copolymerizing at least one hydrocarbon conjugated diene and at least one monovinylarene, employing a hydrocarbon solvent, alkali metal initiator, and solution polymerization conditions, thereby producing an alkali metal terminated copolymer, coupling with a multifunctional coupling agent to produce a coupled polymer in said solvent, wherein the improvement comprises treating the coupled polymer in said solvent, with an effective amount of at least one linear alkane dicarboxylic acid selected from the group consisting of saturated aliphatic diacids having from 2 to 16 carbon atoms and in particular selected from oxalic acid, malonic acid, glutaric acid, adipic acid, suberic acid, sebacic acid, undecanedioic acid, dodecanedioic acid and mixtures thereof.

In addition to such dicarboxylic acids, usually applied in amounts of from 0.02 to 2 parts per 100 parts of copolymer, also small amounts of TNPP and of 2,6-di-tert.butyl-p-cresol were added.

From the Japanese patent application J 60-231717 was known to prepare transparent, devitrification resistant polymers from a solution obtained by polymerizing conjugated diene and/or vinyl aromatic compound using organolithium compound in a hydrocarbon solvent. Said polymer preparation comprised:

(a) adding a stabilizer, selected from a phenol derivative, organic phosphate, amine or sulphur anti-oxidant in amounts of from 0.001-10 parts by weight per 100 parts by weight of polymer, and a terminator selected from water, methanol, ethanol, ethylene glycol, propylene glycol and glycerine to a polymer solution,
(b) removal of the solvent from the solution and then,
(c) mixing a higher fatty acid of 10 carbon atoms or more and/or rhodinic acid and a hydroxycarboxylic acid.

The fatty acid and/or rhodinic acid was used as 0.01-0.5 (preferably 0.05-0.3) parts by weight per 100 parts by weight of the polymer, while the hydroxycarboxylic acid was used in amounts of 0.01-0.2 parts by weight per 100 parts by weight of the polymer. Preferred higher fatty acids were mentioned to be capric acid, lauric acid, stearic acid or behenic acid, while the hydroxycarboxylic acid was selected from glycolic acid, tartaric acid or citric acid.

It will be appreciated that the application of the described combination of acids will give rise to additional costs, as the additional acids are rather expensive and the processing will be more complicated and less reproducible.

From US patent No. 4,835,200 a hot melt adhesive composition was known, possessing colour stability and resistance to heat degradation, oxidation and skin formation, containing a block copolymer comprising at least two monoalkenyl arene polymer end blocks A and at least one elastomeric conjugated diene polymer midblock B and more in particular two polystyrene blocks and at least one poly(butadiene) or poly(isoprene) block prepared using a bromide

3

based coupling agent, a tackifying resin and an effective amount of a stabilizer composition.

The stabilizer composition contains a thio-compound, a phenolic antioxidant, a tris-(nonylated phenyl)phosphite, and an aliphatic compatible epoxy compound, which composition was indicated to be a synergistic stabilizer.

As thio-compounds were used Irganox 565;

as examples of phenolic antioxidants were used Ionol, Irganox 1010 and Irganox 1330;

as examples of phosphite stabilizer were used Ultranox 626, Irgaphos 168 and Polygard HR, the latter of which being preferred; and

as examples of epoxy stabilizer were used Drapex, Araldite GY 6010 and Epon 2004, of which Drapex being preferred (Ionol, Irganox, Polygard, Irgaphos, Drapex, Araldite and Epon are trade marks).

From e.g. US patent No. 5,145,896, was known a method for reducing the colour of a hot melt adhesive formulation, comprising a block polymer of a conjugated diene and a vinyl aromatic compound which contains residual LiBr, LiCl or LiJ salts, which comprises adding to the formulation an amount of an alkyltin compound, selected from the group consisting of mercaptides, mercaptocarboxylates and carboxylates sufficient to reduce colour formation.

From e.g. US patent no. 5,149,741 was known a hot melt construction adhesive suitable for disposable soft goods which is operable to bind a polyolefin or nonwoven substrates to at least one elastic polyolefin, foam or nonwoven substrate. The hot melt construction adhesive comprised styrene-isoprene-styrene block copolymers wherein the styrene content was 25% to 50%, tackifying resin, plasticizing oil and small amounts of phosphite antioxidant, hindered, phenolic antioxidant and a stabiliser. The construction adhesive was required to show a melt viscosity of not greater than 6000 cP at a temperature of 325°F.

However these compositions could not meet the modern requirements of adhesive application conditions.

From US patent No. 5,171,791 was known an adhesive formulation, comprising a polymer prepared by means of a process, comprising anionic sequential polymerization of monomers selected from the group consisting of monovinylidene aromatic monomers and alkadienes with an organolithium containing anionic initiator;

terminating the polymerization by contacting the resulting reaction mixture with a proton donating terminating agent selected from the group consisting of water and alcohols, resulting in the formation of a lithium salt of the terminating agent; and

neutralizing the alkali metal salt by contacting the reaction mixture obtained with from 0.01 to 10.00 equivalents phosphoric acid per equivalent of initiator.

As stabilizers were used in the working examples 0.3 weight percent of Irganox 1010 and 0.3 weight percent of trisnonylphenylphosphite stabilizer;

0.5 weight percent of Irganox 565 and 0.5 weight percent of Irgaphos 168 [tris(2,4-di-tert.butylphenyl)phosphite]; and 0.5 weight percent of Irganox 565 and 0.5 weight percent of Irgaphos 168 respectively.

In spite of the great variety of proposals directed to the preparation of colour stable and heat resistant SBC's, there has still remained a growing need for providing said SBC compositions, which show an attractive combination of colour stability, shear stability, heat stability and adhesive properties when applied in hot melt adhesive compositions, in an economically attractive way.

Therefore it is an object of the present invention to provide such a block copolymer composition aimed at and as specified hereinbefore.

Moreover, it is also an object of the present invention to provide a process for the preparation of said block copolymer compositions aimed at.

Another object of the present invention is formed by hot melt adhesive compositions, containing said block copolymer compositions.

It will be appreciated from the hereinbefore discussed publications that a clear teaching which was generally accepted up to now by persons skilled in the art, was to apply acids after the termination (including coupling) of the living block copolymer and/or before the addition of the selected set of stabilizers, to obtain block copolymer compositions showing allegedly acceptable properties when used in hot melt adhesive compositions.

As a result of extensive research and experimentation there have been surprisingly found block compositions, showing the hereinbefore specified combination of properties.

Accordingly, the present invention relates to a block copolymer composition, comprising;

(a) 100 parts by weight of a linear triblock copolymer, comprising two terminal predominantly poly(styrene) blocks having an apparent molecular weight in the range of from 5,000 to 25,000 and one predominantly poly(isoprene) midblock, as sole or major component, said triblock copolymer having a styrene content in the range of from 10 to 50% by weight based on the total weight of block copolymer, an apparent total molecular weight in the range of from 5,000 to 300,000 and preferably from 100,000 to 270,000 said block copolymer composition having a free poly(styrene) content of at most 6% and preferably < 2.5%, and being obtainable by anionic sequential polymerization of predominantly styrene and isoprene using a monolithium alkyl compound as initiator, in a solvent comprising cyclopentane and/or cyclohexane as main solvent, said anionic sequential polymerization optionally being combined with reinitiation by means of said monofunctional initiator or mixing in a predetermined well adjusted amount of diblock copolymers containing similar blocks, to provide a predetermined and well adjusted minor amount of diblock copolymer, containing similar blocks, (< 40 wt.% relative to the weight of the total weight of block copolymers); termination of the living block copolymer(s) with a proton donating terminating agent, selected from alcohol water, hydrogen or a mono-epoxy compound, such as ethylene oxide, propylene oxide, or phenylglycidyl ether; and recovery of the final block copolymer(s) from the solvent solution by hot water and/or steam coagulation in the absence of oxygen, at a temperature in the range of from 85 to 120 °C and preferably in the range of from 90 to 110 °C, followed by dewatering and/or drying and/or mixing a predetermined well adjusted amount of similar blocks containing diblock copolymer, the final block copolymer composition having a solution viscosity in toluene (25 wt%) at 25 °C in the range of from 0.1 to 3 Pa.s. and preferably from 0.5 to 2 Pa.s,.

and being free of any acid,

(b) 0.1 to 5 parts by weight and preferably from 0.2 to 1 parts by weight of a stabilizer set comprising:

I a specific primary antioxidant, selected from the group consisting of octadecyl ester of 3,5 bis(1,1-dimethylethyl)-4-hydroxy benzene propanoic acid (IRGANOX 1076), 2,4-bis(n-octylthio)6-(4-hydroxy-3,5-di-tert-butyl anilino)-1,3,5 triazine (IRGANOX 565), 2-tert-butyl-6(3-tert-butyl-2-hydroxy-5-methylbenzyl)-4-methylphenyl acrylate (SUMILIZER GM) and combinations thereof, and

ii a phosphite secondary antioxidant, selected from tris-(nonylphenyl)phosphite (TNPP), tris(mixed mono- and dinonylphenyl)phosphite (TNPP), tris-(mixed mono- and diphenyl)pentaerithritol diphosphite, (ULTRANOX 626), tris(2,4-ditert.butylphenyl)phosphite (IRGAFOS 168) and combinations thereof.

(IRGANOX, POLYGARD, ULTRANOX, SUMILIZER and IRGAFOS are trademarks).

A preferred phosphite antioxidant is tris(mixed mono- and dinonylphenyl phosphite (POLYGARD HR).

The styrene content of the linear block copolymer can not be too high, i.e. higher than 50% by weight, as in such a case the block copolymer would be too resinous and hard to be suitably applied in hot melt adhesives. On the other hand, a too low content of styrene compound, i.e. lower than 10% by weight, is also undesired because then the block copolymer will be too soft to handle. It is preferred that the vinyl aromatic compound is present in the block copolymer in an amount in the range of from 13 to 35% by weight.

In particular the poly(isoprene) blocks of the triblock copolymer compositions according to the present invention have average apparent molecular weights in the range of from 80,000 to 250,000, and preferably in the range of from 100,000 to 200,000, whereas the poly(styrene) blocks have average apparent molecular weights ranging from 5,000 to 25,000 and preferably from 9,000 to 15,000.

With the term "predominantly poly(styrene)" and "predominantly poly(isoprene)" as used throughout the specification, is meant that substantially pure homopolymer blocks, copolymer blocks derived from styrene and structurally related comonomers (e.g. a mixture of a major part of styrene and a minor part (< 20 wt.%) of $\alpha$-methylstyrene, o-methylstyrene, p-methylstyrene, p-tert.butyl styrene; 1,3-dimethylstyrene or mixtures thereof), or from isoprene and structurally related comonomers (e.g. a mixture of a major part of isoprene and a minor part of butadiene; 2,3-dimethyl-1,3-butadiene, 1,3-pentadiene or 1,3 hexadiene), or copolymer blocks of structurally not related comonomers, such as styrene in a major amount and isoprene in a minor amount (< 15 wt.%), can be produced as constituting elements of the total block copolymers.

The predominantly poly(isoprene) blocks can be derived from as well substantially pure isoprene feedstock as lower concentrate isoprene feedstocks (> 50 wt% isoprene) containing inert $C_5$ paraffins and mono-olefins. The term inert means that in the isoprene containing mixture, polymerization killers have been inactivated e.g. by sodium treatment.

With the term "diblock copolymers containing similar blocks" as used throughout the specification, is meant diblock copolymers, the blocks of which are constituted by the same monomer(s) as defined for the triblock copolymers and the total apparent molecular weights of which are in the range from 50,000 to 170,000 and preferably from 70,000 to 150,000.

However preferably block copolymers containing substantially pure poly(styrene) and substantially pure poly(isoprene) are prepared and used.

More preferably the apparent molecular weight of the complete triblock copolymers are in the range of from 150,000 to 250,000.

With the term "apparent molecular weight" as used throughout this specification, the molecular weight of a polymer is meant, except polystyrene itself, as measured with gel permeation chromatography (GPC) using polystyrene calibration standards as described in ASTM D 3536.

It will be appreciated that the finally used block copolymers are consisting of substantially pure triblock copolymers or of mixtures of said triblock copolymers and a predetermined well adjusted amount of corresponding diblock copolymers. Such mixtures of block copolymers are obtainable by a polymerization process as specified in the copending European patent application No. 93200909.5, filed 30.3.93, or by mixing in such a predetermined well adjusted amount of corresponding diblock copolymers into the triblock copolymer before or after termination and/or recovery.

The last mentioned European application discloses a process for the preparation of a block copolymer composition, said process comprises the subsequent steps of:

(1) polymerizing vinyl aromatic monomer and in particular styrene in an inert hydrocarbon solvent in the presence of an organolithium initiator until substantially complete conversion;
(2) adding conjugated diene monomer, and in particular isoprene, to the polymerization mixture and allowing said conjugated diene monomer to polymerize until substantially complete conversion;
(3) adding a second portion of organolithium initiator, followed by the addition of a second portion of conjugated diene monomer and allowing said conjugated diene monomer to polymerize until substantially complete conversion;
(4) adding a second portion of vinyl aromatic monomer and allowing said monomer to polymerize until substantially complete conversion; and
(5) adding a terminating agent.

As terminating agent can be used primary alcohols or secondary alcohols, e.g. methanol, ethanol, 2-ethyl hexanol, or a monoepoxy compound, e.g. ethylene oxide, propylene oxide or phenylglycidyl ether. Alcohols are the more preferred terminating agents.

The weight ratio between the UV stabilizer on the one hand and the phosphorus containing anti-oxidant on the other hand should be within the range of from 1 to 0.05 in order to achieve the more attractive block copolymer compositions. The best results are achieved when said weight ratio is in the range of from 0.5 to 0.1.

It will be appreciated that another aspect of the present invention is formed by hot melt adhesive compositions containing said block copolymer compositions.

Accordingly, the present invention also relates to a hot melt adhesive composition comprising:

(a) 100 parts by weight of the block copolymer composition as described hereinbefore;
(b) 20-400 parts by weight of a tackifying resin; and
(c) 0-200 parts by weight of a softening agent.

The primary tackifying resins useful in the practice of this invention include hydrocarbon resins, synthetic polyterpenes, rosin esters and natural terpenes which are semi-solid or solid at ambient temperatures, and soften or become liquid at temperatures ranging generally from 70 °C to 135 °C, preferably from 85 °C to 120 °C. Exemplary of the primary tackifying resins are compatible resins such as (1) natural and modified rosins such as, for example, gum rosin, wood rosin, tall oil rosin, distilled rosin, hydrogenated rosin, dimerized rosin, and polymerized rosin; (2) glycerol and pentaerythritol esters of natural and modified rosins such as, for example, the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) copolymers and terpolymers of natured terpenes, e. g., styrene/terpene and alpha methyl styrene/terpene; (4) polyterpene resins having a softening point, as determined by ASTM method E28-58T, of from 80 ° to 150 °C; the latter polyterpene resins generally resulting from the polymerization of terpene hydrocarbons, such as the bicyclic monoterpene known as pinene, in the presence of Friedel-Crafts catalysts at moderately low temperatures; also included are the hydrogenated polyterpene resins; (5) phenolic modified terpene resins and hydrogenated derivatives thereof such as, for example, the resin product resulting from the condensation, in an acidic medium, of a bicyclic terpene and a phenol; (6) aliphatic petroleum hydrocarbon resins having a Ball and Ring softening point of from 70 ° to 135 °C; the latter resins resulting from the polymerization of monomers consisting primarily of olefins and diolefins; also included are the hydrogenated aliphatic petroleum hydrocarbon resins; (7) aromatic petroleum hydrocarbon resins, and mixed aromatic and aliphatic paraffin hydrocarbon resins, and the hydrogenated derivatives thereof; (8) aromatic modified alicyclic petroleum hydrocarbon resins and the hydrogenated derivatives thereof; and (9) alicyclic petroleum hydrocarbon resins and the hydrogenated derivatives thereof. The preferred primary tackifying resins for use in the practice of this invention are represented by sub-paragraphs (1), (3) and (7), supra. Suitable secondary tackifying resins are those named species wherein the resin is a liquid at ambient temperature.

Various softening agents are useful in the practice of this invention. The softening agent can be used in place of or in combination with the secondary tackifier to reduce viscosity and improve tack properties. Softening agents which have been found as well as vegetable and animal oil and their derivatives. The petroleum derived oils which may be employed are relatively high boiling materials containing only a minor proportion of aromatic hydrocarbons (preferably less than 30% and, more particularly, less than 15% by weight of the oil). Alternately, the oil may be totally non-aromatic. The oligomers may be polypropylenes, polybutenes, hydrogenated polyisoprene, hydrogenated polybutadiene, polypiperylene and copolymers of piperylene and isoprene, having average molecular weights between 350 and 10,000. Vegetable and animal oils include glyceryl esters of the usual fatty acids and polymerization products thereof.

According to a preferred embodiment of the block copolymer compositions of the present invention, the block copolymer constituents are prepared by sequential polymerization of predominantly styrene and predominantly isoprene respectively, optionally in combination with reinitiation, using a monolithium alkyl compound as initiator and optionally as second initiator, and more preferably sec-butyllithium or n-butyllithium, in a solvent comprising cyclopentane or cyclohexane, termination of the living polymer(s) with water, alcohol, hydrogen, mono epoxy compounds and preferably alcohols and more preferably methanol, adding the set of stabilisers compounds,, followed by recovery of the block copolymer(s) by hot water and/or steam coagulation and dewatering and/or drying.

The set of stabilizing compounds can be added after termination of living polymers or at any later stage of the manufacturing process, but preferaby just after termination.

The solvent to be used for the preparation of the block copolymer(s), are preferably substantially pure cyclohexane or substantially pure cyclopentane, or mixtures of one of these solvents as main solvent with a minor amount (< 50 wt%) of linear or branched alkanes having 5 to 7 carbon atoms such as n-hexane, isopentane or n-pentane.

Particularly suitable are cyclohexane, cyclohexane/n-hexane mixtures, cyclohexane/isopentane/n-hexane mixtures, cyclopentane and cyclopentane/isopentane mixtures.

Cyclohexane/isopentane mixtures, substantially pure cyclohexane or cyclopentane are preferred and cyclopentane is the most preferred.

It will be appreciated that the preparation of the triblock constituent, optionally mixed with a corresponding diblock copolymer, obtainable by reinitiation, can be carried out in one single reactor equipped with a recycling condenser or in a dual reactor system.

The drying of the block copolymer to remove the last amounts of adhering water can be carried out in a fluid bed dryer, a hot belt dryer or in a closed evaporator/dryer, wherein a rotating shaft provided with several heated self-cleaning arms, which move along fixed partition plates.

It will be appreciated that advantages related to the block copolymer compositions of the present invention are formed by the avoidance of expensive and sometimes corrosive acids, which in addition may cause contamination of the block copolymers with heavy metals.

The invention is further illustrated by the following examples.

In these examples the molecular weight of the block copolymers prepared is determined by Gel Permeation Chromatography (GPC) using polystyrene calibration standards as described in ASTM D 3536. The polystyrene content of the block copolymers is determined according to the method described in ASTM D 3314.

From the data obtained by these methods other data such as the molar weight ratio of the respective polyisoprene blocks in the triblock and diblock copolymers and the styrene weight ratio triblock/diblock are derived.

## Example 1

A batch of about 4000 kg of a pure triblock copolymer poly(styrene-isoprene-styrene), with equal styrenic endblocks containing 81 wt.% of polyisoprene centre block and 19 wt.% polystyrene in the form of terminal blocks and having a total apparent mol. weight of 206,500, was prepared in cyclopentane solution in a single stainless steel reactor by means of sequential polymerization at a temperature varying between 55-60 °C, using sec.butyllithium (27.5 mol) as anionic initiator. The applied technical cyclopentane had a purity of at least 97% and had previously been distilled and treated with alumina. Isoprene monomer was added to the polymerization carried out under evaporative cooling. Before the polymerization was started, the styrene-solvent mixture was scavenged by addition of initiator.

Thereafter the catalytic amount of initiator was added and after substantially complete conversion, isoprene was added and subsequently by styrene. The living block copolymer was terminated with methanol (10% molar excess to BuLi) and a set of antioxidants/stabilizers was added thereafter, comprising trisnonylphenylphosphite (POLYGARD HR) and 2,4-bis-(n-octylthio)-6-(4-hydroxy-3,5-di-tert.butylanilino)-1,3,5-triazine (IRGANOX 565) in amounts of 0.4 wt. % and 0.09 wt.% respectively relative to the weight of the block copolymer.

The polymer was recovered by steam and/or hot water coagulation at a temperature not exceeding 95 °C. The wet polymer mass was dewatered by using a WELDING ENGINEER equipment, applying a head temperature not exceeding 90 °C.

The polymer was dried in an ARTOS hot air dryer comprising three compartments wherein the respective band speeds were in the range of from 10 m/sec to 1.2 m/sec and the respective temperatures 70 °C, 70 °C and 35 °C.

The relevant properties of the obtained pure triblock copolymer have been listed in the following table.

Example 2

A batch of about 4000 kg of a triblock copolymer poly(styrene-isoprene-styrene) copolymer having $M_{app}$ = 153,000, and bound styrene content of 19% composed by 8.5%, and 10.5% in the respective poly(styrene)blocks, mixed with a predetermined required amount of 27 wt.% or diblock copolymer ($M_{app}$ = 140,000) was prepared under similar conditions as specified in example 1, except that the full sequential polymerization was combined with a second initiation at the start of the isoprene polymerization by dosing a second portion of sec.butyllithium initiator to start novel polymer chains, which react simultaneously with the chains already formed.

The first amount of sec. butyllithium was 21.3 mol and the second amount of sec. butyl lithium was 12.5 mol. The properties of the obtained triblock-diblock copolymer mixture have been listed in the following table.

Example 3

A batch of about 4000 kg of a similar triblock poly(styrene-isoprene-styrene) copolymer having $M_{app}$ = 220,000 and a bound styrene content of 23%, mixed with a predetermined required amount of 26% diblock copolymer ($M_{app}$ = 107,000) was prepared under similar conditions as specified in example 1, using 17.5 mol of sec butyllithium, except that the full sequential polymerization was combined with a second initiation during the isoprene polymerization by dosing a second portion of sec.butyllithium initiator (12.3 mol).

The properties of the obtained triblock-diblock copolymer mixture have been listed in the following table.

Example 4

A batch of about 2500 kg of a triblock-diblock copolymer mixture of styrene and isoprene was prepared having a bound styrene content of 14% and a diblock copolymer content of 17%, the apparent total molecular weights of triblock and diblock copolymers being 216,000 and 110,000 respectively. The polymerization is performed, in a two reactor system, using as solvent a 50:50 mixture cyclohexane/isopentane, by means of a full sequential polymerization in combination with a reinitiation second amount of sec. butyllithium 5.4 mol during the polymerization of isoprene block.

The living polymer was terminated with 2-ethylhexanol. A set of stabilizers, comprising POLYGARD HR and IRGANOX 565 was added in an amount of 0.4 wt% and 0.1 wt% respectively.

The polymer was recovered by steam and/or hot water coagulation the temperature during which was not exceeding 115 °C.

The wet polymer mass was dewatered by using a Welding Engineer Equipment applying a head temperature not exceeding 90 °C.

The polymer was dried in an ARTOS hot airdryer under conditions as specified in example 1.

Examples 5-8

A batch of about 4000 kg of triblock copolymers (styrene-isoprene-styrene) as obtained according to the examples 1-3 was prepared with the exception that as stabilizer combination was used:

| | |
|---|---|
| IRGAFOS 168 | IRGANOX 565, |
| ULTRANOX 628 | IRGANOX 565, |
| TNPP HR | SUMILIZER GM, |
| IRGAFOS 168 | SUMILIZER GM. |

The properties of the obtained triblock-diblock copolymer mixtures have been listed in the following table.

Table

| Examples | Sol. visc. | Breakdown | Colour |
|---|---|---|---|
| | (Pa.s.) A | (%) B | C |
| 1 | 1.1 | 51 | white |
| 2 | 0.6 | 87 | white |
| 3 | 1.1 | 55 | white |
| 4 | 1.9 | 58 | white |
| 5 | 1.1 | 54 | white |
| 6 | 1.1 | 55 | white |
| 7 | 1.1 | 53 | white |
| 8 | 1.1 | 51 | white |
| Comparative Examples | Sol. visc. (Pa.s) A | Breakdown (%) B | Colour C |
| 1. V4111° | 1.0 | 71 | white |
| 2. V4113° | 1.5 | 48 | white |
| 3. Sol. T 193 B* | 0.6 | 62 | slight yellow |

° : These block copolymers are commercially available from DEXCO.

* : This block copolymer is commercially available from Enichem.

A: Solution viscosity is measured in toluene at 25 °C in a 25 wt% toluene solution.

B: The breakdown of the polymer is determined by the ratio between the square root of the solution viscosity of the polymer after and before the testing in a Brabender mixer, i.e. $100. \sqrt{(\text{sol. visc. after/sol. visc. before})}$.

C: Visual determination of the colour.

Brabender test procedure: the polymer material is added pure in a cup. Temperature of the cup is 140 °C. The cup is filled with polymer for 4/5, leaving 1/5 of open space containing air. The blades of the mixer is set at 50 rpm. Due to shear, the temperature of the polymer mass of the sample increases to 160 °C. The test run is performed for 30 minutes. Due to the constant speed of the blades higher viscosity polymers receive more shear and are prone to degrade more than low viscosity ones. Therefore, only polymers with comparable viscosity can be compared with each other e.g. example 4 with comparative example 2 and 3.

## Claims

1. Block copolymer composition, comprising:

(a) 100 parts by weight of a linear triblock copolymer, comprising two terminal predominantly poly(styrene) blocks having an apparent molecular weight in the range of from 5,000 to 25,000 and one predominantly poly (isoprene) midblock, as sole or major component, said triblock copolymer having a styrene content in the range of from 10 to 50% by weight based on the total weight of block copolymer, an apparent total molecular weight in the range of from 5,000 to 300,000, said block copolymer composition having a free poly(styrene) content of at most 6%, and being obtainable by anionic sequential polymerization of predominantly styrene and isoprene, using a monolithium alkyl compound as initiator in a solvent comprising of cyclopentane and/ or cyclohexane as main solvent, said anionic sequential polymerization optionally being combined with reinitiation by means of said monofunctional initiator or mixing in a predetermined well adjusted amount of diblock copolymer containing similar blocks, to provide a predetermined and well adjusted minor amount of diblock copolymer, containing similar blocks, (< 40 wt% relative to the weight of the total weight of block copolymers); termination of the living block copolymer(s) with a proton donating terminating agent selected from alcohol water, hydrogen or a mono-epoxy compound; and recovery of the final block copolymer(s) from the solvent solution by hot water and/or steam coagulation in the absence of oxygen, at a temperature in the range of from 85 to 120 °C, followed by dewatering and/or drying and/or mixing in a predetermined well adjusted amount of similar block containing diblock copolymer, the final block copolymer composition having a solution viscosity in toluene (25 wt%) at 25 °C in the range of from 0.1 to 3 Pa.s, and being free of any acid, (b) 0.1 to 5 parts by weight of a stabilizer set comprising:

I a specific primary antioxidant, selected from the group consisting of octadecyl ester of 3,5 bis(1,1 dimethylethyl)-4-hydroxy benzene propanoic acid (IRGANOX 1076), 2,4-bis(n-octylthio)6-(4-hydroxy-3,5di-tert-butyl anilino)-1,3,5 triazine (IRGANOX 565) and 2-tert.butyl-6-(tert.butyl-2-hydroxy-5-methylbenzyl)-4-methylphenyl acrylate (SUMILIZER GM and combinations thereof; and

II phosphite secondary antioxidant, selected from tris-(nonylphenyl)phosphite (TNPP), tris (mixed mono- and di-nonylphenyl)phosphite such as POLYGARD HR, bis(2,4-di-tert.butyl phenyl)pentaerithritol diphosphite (ULTRANOX 626) or tris(2,4-ditert.butylphenyl)phosphite (IRGAFOS 168) and combinations thereof.

2. Block copolymer composition according to claim 1, characterized in that it contains tris(mixed mono- and dinonylphenyl)phosphite as phosphite anti-oxidant.

3. Block copolymer composition according to claims 1 and 2, characterized in that it contains from 0.2 to 1 part by weight of a stabilizer set.

4. Block copolymer composition according to claims 1-3, characterized in that the free poly(styrene) content is less than 2.5 wt%.

5. Block copolymer composition according to claims 1-4, characterized in that the apparent total molecular weight of the triblock copolymer is in the range of from 100,000 to 270,000.

6. Block copolymer composition according to claims 1-5, characterized in that the poly(isoprene) blocks of the triblock copolymer have apparent molecular weights in the range of from 80,000 to 250,000, whereas the poly(styrene) blocks have average apparent molecular weights ranging from 5,000 to 25,000.

7. Block copolymer composition according to claim 6, characterized in that the poly(isoprene) blocks have apparent molecular weights in the range of from 100,000 to 180,000, whereas the poly(styrene) blocks have average apparent molecular weights ranging from 9,000 to 15,000.

8. Block copolymer composition, according to claims 1-7, characterized in that it contains diblock copolymers containing similar blocks, of a total apparent molecular weight in the range of from 70,000 to 150,000.

9. Block copolymer composition according to claims 1-8, characterized in that the block copolymer(s) contain substantially pure poly(styrene) blocks and substantially pure poly(isoprene) blocks.

10. Block copolymer composition according to claims 1-9, characterized in that triblock copolymer and diblock copolymer mixtures are obtained by means of sequential polymerization in combination of a second initiation, by addition of an additional amount of monofunctional organolithium initiator during the isoprene polymerization step.

11. Block copolymer composition according to claims 1-10, characterized in that the weight ratio between the stabilizer I and the phosphorus containing anti-oxidant II is in the range of from 1 to 0.05.

12. Hot melt adhesive compositions, comprising:

(a) 100 parts by weight of the block copolymer composition according to claims 1-11;
(b) 20-400 parts by weight of a tackifying resin, and
(c) 0-200 parts by weight of a softening agent.

13. Process for the preparation of block copolymer compositions according to claims 1-11, comprising sequential polymerization of predominantly styrene and predominantly isoprene respectively, optionally in combination with reinitiation, using a monolithium alkyl compound as initiator and optionally as second initiator, in a solvent comprising cyclopentane or cyclohexane, termination of the living polymer(s) with alcohol, water, hydrogen or mono epoxy compounds, optionally addition of the set of stabilizing compounds, followed by recovery of the block copolymer(s) by hot water and/or steam coagulation and dewatering and/or drying, and adding the set of stabilizing compounds.

14. Process according to claim 13, characterized in that methanol is used for termination.

15. Process according to claims 13-14, characterized in that pure cyclopentane is used as polymerization solvent.

**Patentansprüche**

1. Blockcopolymerzusammensetzung, umfassend:

   (a) 100 Gewichtsteile eines linearen Dreiblockcopolymers, umfassend zwei endständige vorwiegend Poly(styrol)blöcke mit einem scheinbaren Molekulargewicht im Bereich von 5.000 bis 25.000 und einen vorwiegend Poly(isopren)mittelblock, als einzige oder als Hauptkomponente, welches Dreiblockcopolymer einen Styrolgehalt im Bereich von 10 bis 50 Gew.-%, bezogen auf das Gesamtgewicht des Blockcopolymers, und ein scheinbares Gesamtmolekulargewicht im Bereich von 5.000 bis 300.000 aufweist, welche Blockcopolymerzusammensetzung einen Gehalt an freiem Polystyrol von höchstens 6 % aufweist und erhältlich ist durch anionische sequentielle Polymerisation von vorwiegend Styrol und Isopren, unter Anwendung einer Monolithiumalkylverbindung als Initiator in einem Lösungsmittel, bestehend aus Cyclopentan und/oder Cyclohexan als Hauptlösungsmittel, wobei diese anionische sequentielle Polymerisation gewünschtenfalls mit einer Re-Initiation mittels des genannten monofuktionellen Initiators oder mit einem Einmischen einer vorbestimmten, gut angepaßten Menge an Zweiblockcopolymer, das ähnliche Blöcke enthält, kombiniert wird, um eine vorbestimmte und gut angepaßte kleine Menge an Zweiblockcopolymer mit einem Gehalt an ähnlichen Blöcken zu ergeben (< 40 Gew.-%, bezogen auf das Gesamtgewicht der Blockcopolymere); Terminierung des lebenden Blockcopolymers bzw. der lebenden Blockcopolymere mit einem Protonen liefernden Abbruchmittel, das unter Alkohol, Wasser, Wasserstoff oder einer Monoepoxyverbindung ausgewählt ist; und Gewinnung des fertigen Blockcopolymers bzw. der fertigen Blockcopolymere aus der Lösungsmittellösung durch Heißwasser- und/oder Dampfkoagulation in Abwesenheit von Sauerstoff bei einer Temperatur im Bereich von 85 bis 120 °C, gefolgt von einem Entwässern und/oder Trocknen und/oder Einmischen einer vorbestimmten, gut angepaßten Menge eines ähnliche Blöcke enthaltenden Zweiblockcopolymers, wobei die End-Blockcopolymerzusammensetzung eine Lösungsviskosität in Toluol (25 Gew.-%) bei 25°C im Bereich von 0,1 bis 3 Pa.s aufweist und frei von jeglicher Säure ist,
   (b) 0,1 bis 5 Gewichtsteile eines Stabilisatorsatzes, umfassend:

   I ein spezifisches primäres Antioxidationsmittel, ausgewählt aus der Gruppe, die aus dem Octadecylester von 3,5-Bis(1,1-dimethylethyl)-4-hydroxyphenylpropionsäure (IRGANOX 1076), 2,4-Bis(n-octylthio)-6-(4-hydroxy-3,5-di-tert-butyl-anilino)-1,3,5-triazin (IRGANOX 565) und 2-tert.Butyl-6-(tert.butyl-2-hydroxy-5-methylbenzyl)-4-methylphenyl-acrylat (SUMILZIZER GM) und Kombinationen hievon besteht; und
   II ein sekundäres Phosphit-Antioxidationsmittel, ausgewählt unter Tris-(nonylphenyl)phosphit (TNPP), Tris(gemischt mono-und di-nonyl-phenyl)phosphit wie POLYGARD HR, Bis-(2,4-di-tert.butylphenyl)pentaerythrit-diphosphit (ULTRANOX 626) oder Tris-(2,4-di-tert.butylphenyl)phosphit (IRGAFOS 168) und Kombinationen hievon.

2. Blockcopolymerzusammensetzung nach Anspruch 1, dadurch gekennzeichnet, daß sie als Phosphit-Antioxidationsmittel Tris (gemischt mono-und di-nonylphenyl)phosphit enthält.

3. Blockcopolymerzusammensetzung nach den Ansprüchen 1 und 2, dadurch gekennzeichnet, daß sie 0,2 bis 1 Gewichtsteil eines Stabilisatorsatzes enthält.

4. Blockcopolymerzusammensetzung nach den Ansprüchen 1 bis 3, dadurch gekennzeichnet, daß der Gehalt an freiem Polystyrol weniger als 2,5 Gew.-% beträgt.

5. Blockcopolymerzusammensetzung nach den Ansprüchen 1 bis 4, dadurch gekennzeichnet, daß das scheinbare Gesamtmolekulargewicht des Dreiblockcopolymers im Bereich von 100.000 bis 270.000 liegt.

6. Blockcopolymerzusammensetzung nach den Ansprüchen 1 bis 5, dadurch gekennzeichnet, daß die Poly(isopren) blöcke des Dreiblockcopolymers scheinbare Molekulargewichte im Bereich von 80.000 bis 250.000 aufweisen, wogegen die Poly(styrol)blöcke scheinbare mittlere Molekulargewichte im Bereich von 5.000 bis 25.000 aufweisen.

7. Blockcopolymerzusammensetzung nach Anspruch 6, dadurch gekennzeichnet, daß die Poly(isopren)blöcke scheinbare Molekulargewichte im Bereich von 100.000 bis 180.000 aufweisen, wogegen die Poly(styrol)blöcke scheinbare mittlere Molekulargewichte im Bereich von 9.000 bis 15.000 aufweisen.

8. Blockcopolymerzusammensetzung nach den Ansprüchen 1 bis 7, dadurch gekennzeichnet, daß sie Zweiblockcopolymere mit einem Gehalt an ähnlichen Blöcken mit einem scheinbaren Gesamtmolekulargewicht im Bereich von 70.000 bis 150.000 enthält.

9. Blockcopolymerzusammensetzung nach den Ansprüchen 1 bis 8, dadurch gekennzeichnet, daß das Blockcopolymer bzw. die Blockcopolymere im wesentlichen reine Poly(styrol)blöcke und im wesentlichen reine Poly(isopren) blöcke enthält bzw. enthalten.

10. Blockcopolymerzusammensetzung nach den Ansprüchen 1 bis 9, dadurch gekennzeichnet, daß Gemische aus Dreiblockcopolymeren und Zweiblockcopolymeren mittels einer sequentiellen Polymerisation in Kombination mit einer zweiten Initiation durch Zusetzen einer weiteren Menge an monofuktionellem Organolithiuminitiator während der Isoprenpolymerisationsstufe erhalten werden.

11. Blockcopolymerzusammensetzung nach den Ansprüchen 1 bis 10, dadurch gekennzeichnet, daß das Gewichtsverhältnis zwischen dem Stabilisator I und dem phosphorhältigen Antioxidationsmittel II im Bereich von 1 bis 0,05 liegt.

12. Heißschmelzkleberzusammensetzungen, umfassend:

(a) 100 Gewichtsteile der Blockcopolymerzusammensetzung nach den Ansprüchen 1 bis 11;
(b) 20 bis 400 Gewichtsteile eines klebrigmachenden Harzes und
(c) 0 bis 200 Gewichtsteile eines Erweichungsmittels.

13. Verfahren zur Herstellung von Blockcopolymerzusammensetzungen nach den Ansprüchen 1 bis 11, umfassend eine sequentielle Polymerisation von vorwiegend Styrol bzw. vorwiegend Isopren, gegebenenfalls in Kombination mit einer Re-Initiierung, unter Verwendung einer Monolithiumalkylverbindung als Initiator und gegebenenfalls als zweiter Initiator, in einem Cyclopentan oder Cyclohexan umfassenden Lösungsmittel, Terminierung des lebenden Polymers oder der lebenden Polymere mit Alkohol, Wasser, Wasserstoff oder Monoepoxyverbindungen, gegebenfalls Zusetzen des Satzes aus Stabilisatorverbindungen, gefolgt von einer Gewinnung des Blockcopolymers bzw. der Blockcopolymere durch Heißwasser- und/oder Dampfkoagulation und Entwässern und/oder Trocknen, und Zugeben des Satzes aus Stabilisatorverbindungen.

14. Verfahren nach Anspruch 13, dadurch gekennzeichnet, daß Methanol für die Abbruchreaktion verwendet wird.

15. Verfahren nach den Ansprüchen 13 bis 14, dadurch gekennzeichnet, daß als Polymerisationslösungsmittel reines Cyclopentan verwendet wird.

## Revendications

1. Composition de copolymère séquencé comprenant :

(a) 100 parties en poids d'un copolymère triséquencé linéaire, comprenant deux séquences terminales en prédominance de poly(styrène) possédant un poids moléculaire apparent dans la plage de 5000 à 25000 et une séquence médiane en prédominance de poly(isoprène), à titre d'unique composant ou de composant majeur, ledit copolymère triséquencé possédant une teneur en styrène qui se situe dans la plage de 10 à 50% en poids, sur base du poids total du copolymère séquence, un poids moléculaire total apparent se situant dans la plage de 5000 à 300000, ladite composition de copolymère séquence possédant une teneur en poly(styrène) libre d'au maximum 6%, et pouvant être obtenue par la polymérisation séquentielle anionique dans la prédominance du styrène et de l'isoprène en utilisant un composé de monolithiumalkyle à titre d'amorceur, dans un solvant comprenant du cyclopentane et/ou du cyclohexane à titre de solvant principal, ladite polymérisation séquentielle anionique étant éventuellement combinée à un réamorçage à l'aide dudit amorceur monofonctionnel ou à un mélange dans une quantité prédéterminée et parfaitement ajustée de copolymères diséquencés contenant des séquences similaires, pour obtenir une quantité mineure prédéterminée et parfaitement ajustée de copolymère diséquencé, contenant des séquences similaires (moins de 40% en poids par rapport au poids total des copolymères séquencés); la terminaison du ou des copolymères séquencés suivants avec un agent de terminaison donneur de protons, choisi parmi un alcool, l'eau, l'hydrogène et un composé du type monoépoxy, et la récupération du ou des copolymères séquencés finals de la solution de solvant à l'aide d'eau chaude et/ou par coagulation à la vapeur d'eau en l'absence d'oxygène, à une température comprise dans la plage de 85 à 120°C, opération suivie d'une déshydratation et/ou d'un séchage et/ou du mélange d'une quantité prédéterminée et parfaitement ajustée de séquences similaires contenant du copolymère diséquencé, la composition de copolymère séquencé finale possédant une viscosité en solution dans le toluène (25% en poids) à 25°C qui varie dans la plage de 0,1 à 3 Pa.s.,

et dépourvu de tout acide,

(b) 0,1 à 5 parties en poids d'un jeu de stabilisateurs comprenant :

I un antioxydant primaire spécifique, choisi dans le groupe formé par le 3,5-bis-(1,1-diméthyléthyl)-4-hydroxybenzènepropanoate d'octadécyle (IRGANOX 1076), la 2,4-bis-(n-cctylthio)-6-(4-hydroxy-3,5-di-tert-butylanilino)-1,3,5-triazine (IRGANOX 565), l'acrylate de 2-tert-butyl-6-(3-tert-butyl-2-hydroxy-5-méthylbenzyle)-4-méthylphényle (SUMILIZER GM et leurs combinaisons, et

II un antioxydant secondaire du type phosphite, choisi parmi le phosphite de tris-(nonylphényle) (TNPP), le phosphite de tris-(mono- et dinonylphényle mixte) (POLYGARD HR), le diphosphite de bis-(2,4-di-tert-butylphényle)pentaérythritol (ULTRANOX626), le phosphite de tris-(2,4-di-tert-butylphényle) (IRGAFOS 168) et leurs combinaisons.

2. Composition de copolymère séquencé suivant la revendication 1, caractérisée en ce qu'elle contient du phosphite de tris(mono- et dinonylphényle mixte) à titre d'antioxydant au phosphite.

3. Composition de copolymère séquencé suivant l'une quelconque des revendications 1 et 2, caractérisée en ce qu'elle contient de 0,2 à 1 partie en poids d'un jeu de stabilisateurs.

4. Composition de copolymère séquencé suivant l'une quelconque des revendications 1 à 3, caractérisée en ce que la teneur en poly(styrène) libre est inférieure à 2,5% en poids.

5. Composition de copolymère séquencé suivant l'une quelconque des revendications 1 à 4, caractérisée en ce que le poids moléculaire total apparent du copolymère triséquencé varie de 100000 à 270000.

6. Composition de copolymère séquence suivant l'une quelconque des revendications 1 à 5, caractérisée en ce que les séquences de poly(isoprène) du copolymère triséquencé possèdent des poids moléculaires apparents qui varient de 80000 à 250000, alors que les séquences de poly(styrène) possèdent des poids moléculaires apparents moyens qui fluctuent de 5000 à 25000.

7. Composition de copolymère séquencé suivant la revendication 6, caractérisée en ce que les séquences de poly(isoprène) possèdent des poids moléculaires apparents qui varient de 100000 à 180000, cependant que les séquences de poly(styrène) possèdent des poids moléculaires apparents moyens qui fluctuent de 9000 à 15000.

8. Composition de copolymère séquencé suivant l'une quelconque des revendications 1 à 7, caractérisée en ce qu'elle contient des copolymères diséquencés contenant des séquences similaires, d'un poids moléculaire apparent total qui varie de 70000 à 150000.

9. Composition de copolymère séquencé suivant l'une quelconque des revendications 1 à 8, caractérisée en ce que le ou les polymères séquencés contiennent des séquences de poly(styrène) sensiblement pur et des séquences de poly(isoprène) sensiblement pur.

10. Composition de copolymère séquencé suivant l'une quelconque des revendications 1 à 9, caractérisée en ce que les mélanges à copolymères triséquencés et à copolymères diséquencés s'obtiennent par une polymérisation séquentielle en combinaison avec un second amorçage, par l'addition d'une quantité supplémentaire d'amorceur à base d'organolithium monofonctionnel au cours de l'étape de polymérisation de l'isoprène.

11. Composition de copolymère séquencé suivant l'une quelconque des revendications 1 à 10, caractérisée en ce que le rapport pondéral entre le stabilisateur I et l'antioxydant contenant du phosphore II varie de 1 à 0,05.

12. Compositions adhésives thermofusibles, comprenant :

(a) 100 parties en poids de la composition de copolymère séquencé suivant l'une quelconque des revendications 1 à 11:
(b) 20 à 400 parties en poids d'une résine conférant de l'adhésivité, et
(c) 0 à 200 parties en poids d'un agent de ramollissement.

13. Procédé de préparation de compositions de copolymères séquencés suivant l'une quelconque des revendications 1 à 11, comprenant la polymérisation séquentielle dans prédominance du styrène et dans prédominance de l'isoprène respectivement, éventuellement en combinaison avec un réamorçage, en utilisant un composé d'alkylmonolithium à titre d'amorceur et éventuellement, à titre de second amorceur, dans un solvant comprenant du cyclopentane ou du cyclohexane, la terminaison du ou des polymères vivants avec de l'alcool, de l'eau, de l'hydrogène ou des composés du type monoépoxy, l'addition facultative du jeu de composés stabilisateurs, suivie de la récupération du ou des copolymères séquencés par coagulation à l'eau chaude et/ou à la vapeur et l'élimination de l'eau et/ou le séchage et l'addition du jeu de composés stabilisateurs.

14. Procédé suivant la revendication 13, caractérisé en ce que l'on utilise le méthanol pour la terminaison.

15. Procédé suivant l'une quelconque des revendications 13 et 14, caractérisé en ce que l'on utilise du cyclopentane pur à titre de solvant de polymérisation.